# EUROPEAN PATENT SPECIFICATION

(11) **EP 3 278 936 B1**
(45) Date of publication and mention of the grant of the patent: **23.04.2025**
(21) Application number: 17183193.6
(22) Date of filing: 26.07.2017
(51) Int. Cl.: B25F 5/00, B25F 5/02, B23Q 11/08, E01B 31/06

(54) **PROTECTIVE SHEATH FOR A DRILL FOR DRILLING RAILS AND COMBINATION OF A DRILL FOR DRILLING RAILS AND A PROTECTIVE SHEATH**
SCHUTZHÜLLE FÜR EINEN BOHRER ZUM BOHREN VON SCHIENEN UND KOMBINATION EINES BOHRERS ZUM BOHREN VON SCHIENEN UND EINER SCHUTZHÜLLE
GAINE DE PROTECTION POUR UN FORET POUR LE FORAGE DE RAILS ET COMBINAISON D'UNE FOREUSE POUR LE FORAGE DE RAILS ET D'UNE GAINE DE PROTECTION

(30) Priority: 05.08.2016 IT 201600083155
(43) Date of publication of application: 07.02.2018
(73) Proprietor: CEMBRE S.p.A., 25135 Brescia (IT)
(72) Inventor: BAREZZANI, Gualtiero, I-25135 BRESCIA (IT); VEGLIANTI, Samuel, I-25135 BRESCIA (IT)
(74) Representative: Leihkauf, Steffen Falk

(56) References cited:
- WO-A1-00/47872
- WO-A1-02/30602
- WO-A1-2007/090914
- WO-A2-2014/001747
- DE-A1- 3 828 785
- KR-A- 20120 083 014
- US-A1- 2013 255 981
- US-B1- 6 264 407

## Description

The present invention relates to a protective sheath for a drill for drilling rails and track apparatuses in railway applications, according to the preamble of claim 1. Such a protective sheath is known from document KR20120083014 A. The invention further relates to the combination of a drill for drilling rails and protective sheath applicable to the drill.

Drills for drilling rails are known, having a body which supports an electric or internal combustion motor, a drilling tool, a reduction gear arranged between the motor and the drilling tool, and means for removably fixing the body with respect to an element to be drilled, wherein means are provided for translating the drilling tool with respect to the element itself.

The drills for drilling rails of the prior art still have some drawbacks.

A problem which is not adequately solved is the difficulty of making holes in bad weather or bad environmental conditions, in which water, sand, soil particles or snow either fall or are carried into the zone of the drill, where they are aspirated by the cooling system of the drill or penetrate into the connections and the electric circuits, with the risk of damaging the drill and injuring the operator. The most typical prohibitive weather or environmental conditions include rain, storms, wind in presence of dust, sand and water.

At the current state, in case of prohibitive weather conditions, the rail drilling works must be interrupted and the drills must be put away, sheltered from the rain and the wind until the weather improves. This implies undesired waste of time and delays in the works. Alternatively, when possible, tents or temporary protective constructions can be erected which protect the construction site from the external conditions. This second solution is particularly useful in climatic zones which are hostile in all cases for the operators, e.g. in case of very cold or very hot temperatures, but is excessively costly for railway construction sites which move rapidly from one point of operation to another and are only occasionally subject to rain and storms.

lt is thus the object of the present invention to provide a protective sheath for a drill for drilling railway rails, as well as a drill provided with said sheath, having features such to allow safe operation of the drill also in bad weather conditions.

This and other objects are achieved by a protective sheath according to claim 1 and by the combination of a drill and a protective sheath according to claim 15. The dependent claims relate to advantageous and preferred embodiments.

According to an aspect of the invention, a sheath for a drill is provided, of the type having:
- a support portion, which supports an electric motor which can be powered by a battery, a drilling tool defining a tool axis, and a reduction gear arranged between the motor and the drilling tool,
- a rechargeable battery removably coupled to the electric motor,

wherein said sheath is made of flexible elastomeric material, impermeable to liquids, and has a generically tubular shape with a front opening and a rear opening opposite the front opening in the direction of the tool axis, so as to be able to be inserted or slotted over the electric motor and over at least a part of the battery to protect them,
wherein the sheath forms a ventilation channel with one or more first inlet openings formed in an outer surface of the sheath and facing downwards, and with an inner ventilation section, which is concave so as not to adhere to the motor, and is open towards the inside of the sheath so as to communicate cooling air from the inlet openings to a cooling system of the drill, e.g. of the motor of the drill.

By virtue of the impermeability of the sheath and of the ventilation channel with air inlet openings facing downwards, the drill can be protected from bad weather conditions, in particular from the rain, without compromising the cooling of the electric motor. The elastomeric material of the sheath allows its easy application onto and, if necessary, removal from the drill.

According to an embodiment
at least one of the openings (25; 26) or an additional opening formed in the sheath (24) is adapted for the replacement of at least one removable part (6), especially a rechargeable battery or an accessory, of the drill (1) without having to remove the sheath from the drill (1).

In order to understand the invention and better appreciate its advantages, the description of some embodiments will be provided below by way of non-limiting examples with reference to the accompanying figures, in which:
figure 1 is a side-front perspective view of a protective sheath according to an embodiment,
figure 2 is a side-rear view (operator side) of the protective sheath in figure 1,
figure 3 is a front view (tool side of the drill) of the protective sheath in figure 1,
figure 4 is a bottom view of the protective sheath in figure 1,
figure 5 shows a perspective section of the inside of a first side of the protective sheath in figure 1 taken along a median-longitudinal section plane,
figure 6 shows a perspective section of the inside of a second side of the protective sheath in figure 1 taken along a median-longitudinal section plane,
figure 7 is a rear-side perspective view of a drill for rails provided with the sheath in figure 1,
figure 8 is a front-side perspective view of the drill in figure 7,
figure 9 is a side view of the drill in figure 7,
figure 10 shows the drill in figure 7 without the protective sheath.

For a better understanding of the conditions of use of the protective sheath, a drill 1 for drilling railway rails will be firstly described, with particular reference to the features of the drill 1 with which the protective sheath must interact, followed by the description of the protective sheath itself.

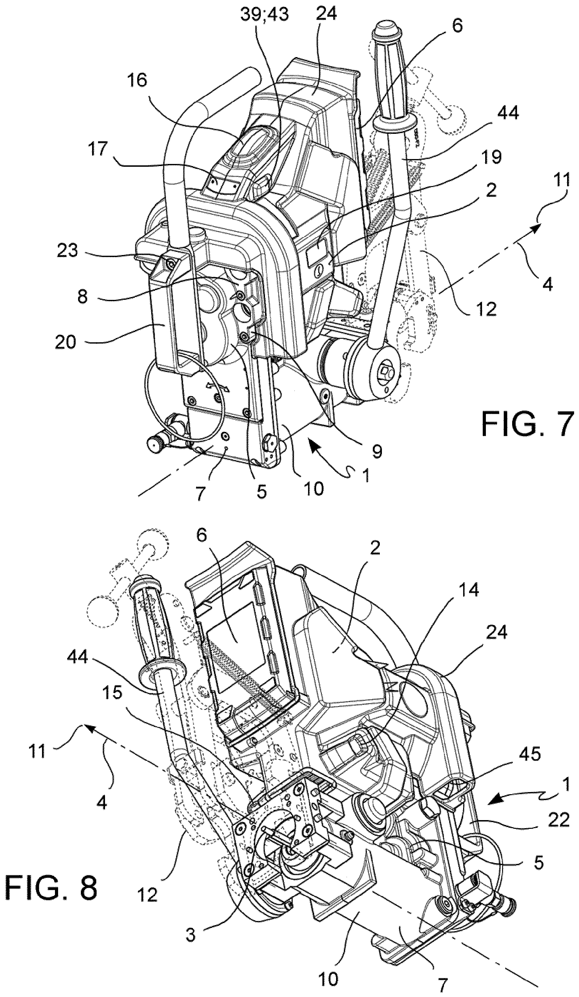

With reference to figure 7-10, a drill 1 for drilling railway rails (not shown) comprises an electric motor 2, which may be powered by a battery, a drilling tool 3 (shown here as a pilot drill bit, by way of example) defining a tool axis 4, a reduction gear 5 arranged between the motor 2 and the drilling tool 3, a replaceable and rechargeable battery 6 and a support portion 7.

The support portion 7 may be substantially "L"-shaped with a first wing 8 which forms a connection portion 9, to which the electric motor 2 is coupled, and a second wing 10 extending in transversal direction, e.g. approximately perpendicular, with respect to the first wing 8 and which supports the drilling tool 3. The electric motor 2 is arranged above the second wing 10 and is vertically distanced from it, and the electric motor 2 and the second wing 10 both project from the first wing 8 in a same drilling direction 11 of the drill 1, conferring a U-shape to the drill 1.

The drill 1 may further comprise means 12 (shown with a dashed line in the figures) for removably fixing the drill 1, in particular the support portion 7 with respect to an element (e.g. a rail) to drill.

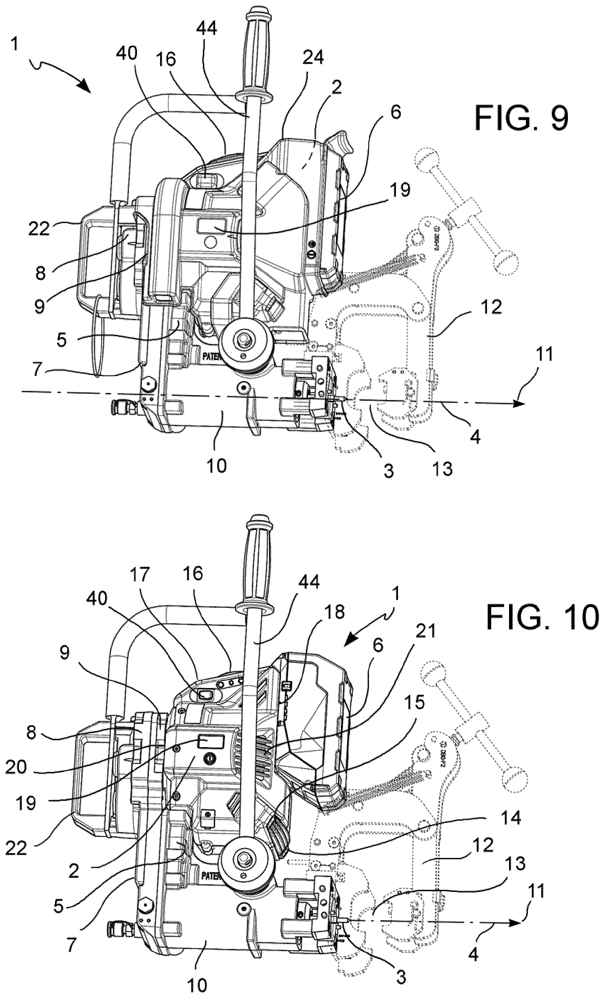

In order to improve the visibility in the drilling region 13 (Figures 9, 10), the drill 1 may comprise a lighting system having, for example, two lighting sources 14, 15 (e.g. LEDs) mutually spaced apart and arranged on two opposite sides with respect to a hypothetical vertical working plane containing the tool axis 4.

The drill 1 comprises means for switching on/manually controlling it, e.g. a button or a lever 16, which may be arranged, for example, on an upper side of the drill 1, e.g. in an upper wall of the electric motor 2.

The drill 1 may comprise a display 17, preferably multicolour, to generate one or more visual warnings, e.g. charge state of the battery 6, anomaly during drilling, electric power supply error, need for maintenance, as well as instantaneous drilling conditions. The (multicolour) display 17 may be arranged on an upper-rear side (user side) of the drill 1, preferably in an upper and/or rear wall of the electric motor 2.

The drill 1 may comprise a speed switch 40, with at least two or three stable switching positions, which makes it possible to select the rotation speed of the motor 2, so as to be able to drill with bits of different diameters, but remaining in all cases within an optimal speed range of the teeth of the bit.

The drill 1 may also comprise a switch for activating and deactivating a lighting system of the drill.

The rechargeable battery 6 may be reversibly mechanically coupled to a battery interface 18 of the drill 1 formed in an upper portion of the electric motor 2 facing in drilling direction 11 (Figures 9, 10) and possibly above the axis 4 of the tool 3, e.g. centred with respect to the working plane. In this manner, the battery 6 forms the free end of the upper wing of the U shape of the structure of the drill 1, approximates the centre of gravity of the drill 1 towards the rail, does not cast shadows in the lighting of the drilling region 13, does not hinder the user who is on the opposite side with respect to the drilling region 13 and does not interfere with the ballast under the rail 2.

The battery interface 18 and the battery 6 may be configured for a mechanical coupling and a electric connection by means of translational sliding of the battery 6 from the top downwards or parallel to the extension of the first wing 8 of the supporting portion 7.

The drill 1 may comprise a further display 19 for viewing operating and/or control parameters of the drill 1. The further display may be positioned in a side wall of the motor 2.

The motor 2 comprises a cooling system with one or more air intake openings 20, formed for example in a rear wall (user side) or in a rear-side wall of the motor 2, as well as one or more air discharge openings 21, formed for example in a front wall (tool side) or in a front-side wall of the motor 2 (Figure 10).

The drill 1 may further comprise a handle 22, which can be either fixed or locked to the support portion 7 by means of a locking member 23, e.g. a screw.

According to the invention, the drill 1 may be equipped with a sheath 24 made of flexible elastomeric material, impermeable to liquids, which has a generically tubular shape with a front opening 25 and a rear opening 26 opposite the front opening 25 in the direction of the tool axis 4, so as to be able to be slotted (or inserted) over the electric motor 2 and over at least one part of the battery 6 to protect them.

The sheath 24 forms a ventilation channel 27 with one or more first inlet openings 28 formed in an outer surface of the sheath 24 and facing downwards, and with an inner ventilation section 29, which is concave so as not to adhere to the motor 2, open towards the inside of the sheath 24 so as to communicate cooling air from the inlet openings to a cooling system, in particular to the intake openings 20, of the motor 2. The internal ventilation section 29 is isolated from the outside by virtue of the wall of the sheath 24 in which it is formed.

By virtue of the impermeability of the sheath 24 and of the ventilation channel 27 with air inlet openings 28 facing downwards, the drill 1 can be protected from bad weather conditions, in particular from the rain, without however compromising the cooling of the electric motor. The elastomeric material of the sheath 24 allows its easy application onto and, if necessary, removal from the drill 1.

ln an embodiment, the ventilation channel 27 is formed in a rear portion (user side) of the sheath 24, at intake openings 20 of the motor 2 of the drill 1.

The ventilation channel 27 may be arch- or horseshoe-shaped along two side walls and along an upper wall of the sheath 24 so as to be positioned (with the sheath applied on the drill) straddling the electric motor 2. The air inlet openings 28 are advantageously formed at the two lower ends of the ventilation channel 27.

The ventilation channel 27 may comprise one or more intake filters 45, preferably positioned in replaceable manner at air inlet openings 28. The intake filters 30 may comprise nets, fabrics, porous bodies, e.g. made of foam, with mesh or cell size selected according to the desired degree of protection. This further improves the protection from dust and particulate matter. Rain protection is guaranteed by the air intake on the bottom and from the bottom, obtained by positioning and orienting the air inlet openings 28.

According to an embodiment, instead of or in addition to the aforesaid intake filters 45, one or more labyrinth bodies 45' may be envisaged, preferably positioned at the air inlet openings 28 and defining a tortuous passage path, such to cause the water drops and dust to be deposited and/or fall back outside before entering into the ventilation channel 27. The labyrinth body 45' may be made separately and then connected to the ventilation channel 27. The labyrinth body 45' may be made of material different from that of the ventilation channel 27, e.g. of a material or of a combination of materials that are water-repellent and/or hydrophilic. The labyrinth body 45' may be made removably accommodated in a specific housing formed in the ventilation channel 27.

According to an embodiment, the sheath 24 forms a discharge channel 30 with one or more outlet openings 31 formed in an outer surface of the sheath 24 and facing downwards, and with an inner discharge section 32, which is concave so as not to adhere to the motor 2, and is open towards the inside of the sheath 24, so as to be able to receive air expelled from the cooling system, in particular from the discharge openings 21, of the motor 2 and to discharge it through the outlet openings 31. The internal discharge section 32 is isolated from the outside by virtue of the wall of the sheath 24 in which it is formed.

Similarly to the ventilation channel 27, the discharge channel 30 also protects the motor 2 of the drill 1 from the penetration of rain, dust and particles in case of bad environmental or weather conditions.

In an embodiment, the discharge channel 30 is formed in a front portion (tool side) and/or side portion of the sheath 24, at discharge openings 21 of the motor 2 of the drill 1.

Preferably, the inner discharge section 32 comprises two opposite lateral cavities, formed in two lateral walls of the sheath 24 and in communication with the at least one outlet opening 31 formed in a bottom wall of the sheath 24 and facing downwards.

The discharge channel 30 may comprise one or more filters 46, preferably positioned in replaceable manner at air outlet openings 31. This further improves the degree of protection from dust and particulate matter. Rain protection is guaranteed by the downward positioning and orientation of the outlet openings 31. A same labyrinth body 45' as described in connection with the inlet openings may be provided instead of or in addition to the filter 46.

The ventilation channels 27 and discharge channels 30 are preferably spaced apart so as to either prevent or hinder the suction of air from the discharge channel 30 into the ventilation channel 27.

The protective sheath 24 may form a fixing hole 33 for reversibly fixing its correct position on the drill 1 by means of a locking member 23, e.g. by means of a same locking member of the handle 22 of the drill 1.

In an embodiment, the fixing hole 33 is formed in a rear (user side) - upper region of the sheath 24, which is superimposed on a rear (user side) region of the drill 1.

The sheath 24 forms a battery opening 35, which can be positioned at the battery 6 of the drill 1 and delimited by a battery-covering edge 34, which is flexible and can be elastically widened so as to:
- cover a battery interface 18 of the drill 1 and at least one part of the battery 6 when the battery is attached to the battery interface 18,
- allow the uncoupling and the removal of the battery 6 from the drill 1 through the battery opening 35, as well as the application of a recharged battery 6 to the drill 1, without having to remove the sheath 24 from the drill 1.

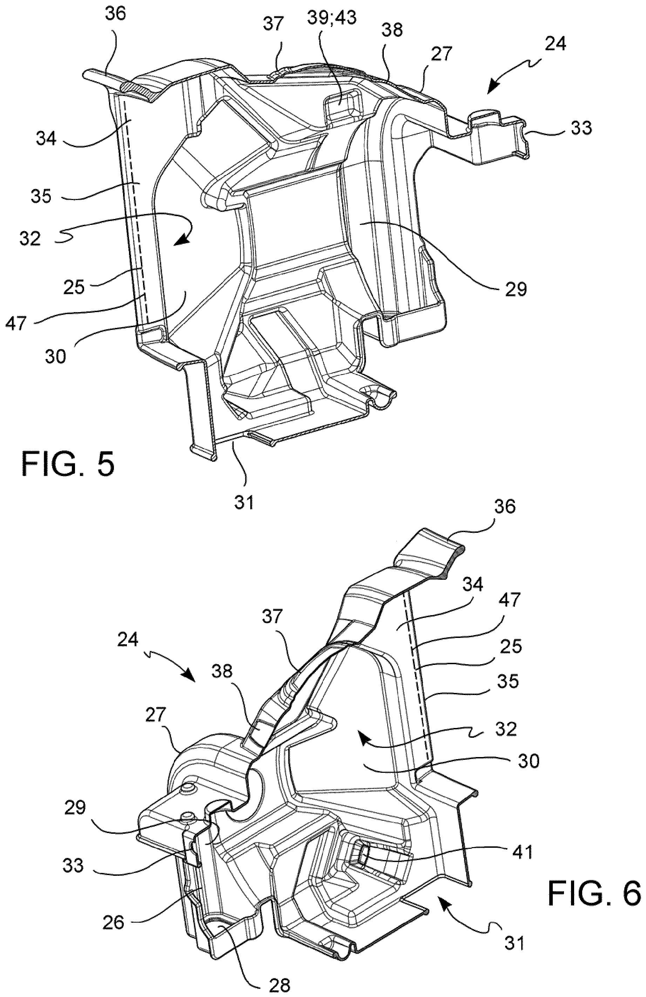

In order to increase adherence of the sheath 24 to the battery 6, the battery-covering edge 34 may be reinforced by means of a reinforcement edge or rib 47 (diagrammatically shown with a dashed line in figures 5 and 6), extending along the battery-covering edge 34 and of greater thickness than the wall of the sheath 24 adjacent to the battery-covering edge 34. The reinforcement rib 47 may project towards the internal of the sheath 24 (in direction of the drill) to form a sealing lip which improves sealing with the battery 6.

Advantageously, the battery opening 35 is formed by the front opening 25 (figure 9) or, alternatively, by the rear opening 26.

Furthermore, the battery-covering edge 34 may form a handle portion 36 projecting towards the outside of the sheath 24 to facilitate the manual gripping and widening of the battery opening 35. For better ergonomics, the handle portion 36 is formed on an upper side of the battery-covering edge 34.

In an embodiment, the sheath 24 forms a first portion 37 projecting outwards, in a bellows, stepped or thinned wall fashion, positioned at the button/lever 16 for switching the drill 1 on and off, e.g. on an upper side of the sheath 24, and deformable so as to allow the actuation of the button/lever 16 for switching on and off from outside of the sheath 24.

The sheath may also form a first viewing zone 38 made of transparent material and which does not substantially alter the visibility of colours, wherein the first viewing zone 38 may be positioned at the (multicolour) display 17 and formed, e.g. on an upper-rear side (user side) of the sheath 24. The first viewing zone 38 may be externally polished and/or thinned (to further increase transparency) with respect to the surrounding walls of the sheath 24.

The sheath 24 may form a second portion 39 projecting outwards, in a bellows, stepped or thinned wall fashion, positioned at the speed switch 40 of the drill 1, e.g. in a side wall of the sheath 24, and deformable so as to allow the manual switching of the speed switch 40 from outside of the sheath 24.

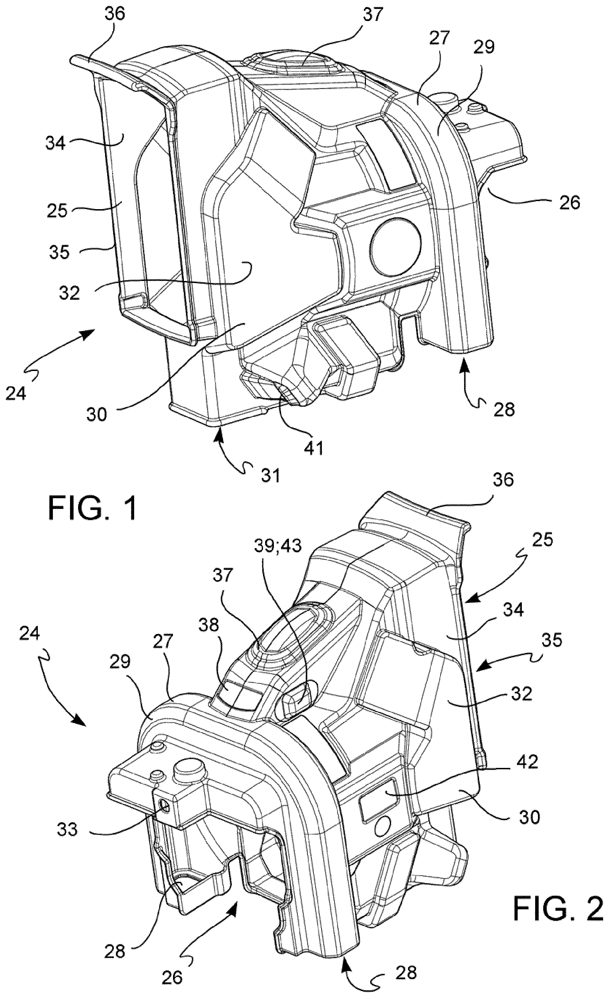

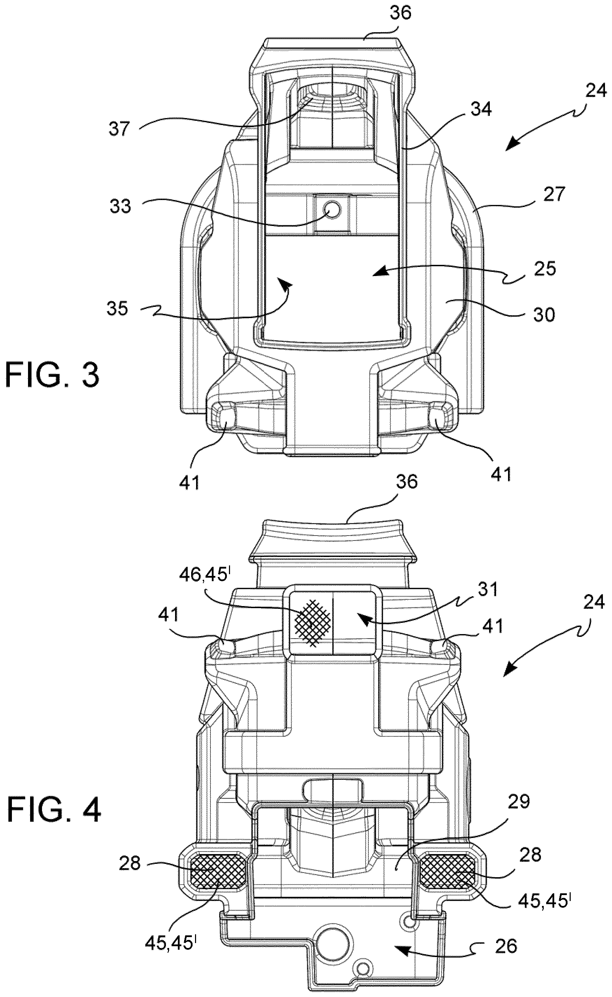

In an embodiment, the sheath 24 further forms one or more lighting portions 41 made of transparent material, which may be externally polished and/or thinned (to further increase transparency) with respect to the surrounding walls of the sheath 24. The one or more lighting portions 41 may be positioned at one or more light sources 14, 15 of the lighting system of the drill 1. Preferably (Figure 3), there are provided two different lighting portions 41 mutually spaced apart and arranged on two opposite sides with respect to a hypothetical vertical median plane of the sheath 24 and facing in front direction or in front-lower direction (Figures 1, 9) towards the drilling region of the drill 1.

The sheath 24 may form a second viewing zone 42 made of transparent material, e.g. in a lateral wall of the sheath 24, which can be positioned at the further display 19 of the drill 1. The second viewing zone 42 may be externally polished and/or thinned (to further increase transparency) with respect to the surrounding walls of the sheath 24.

The sheath 24 may form a third portion 43 projecting towards the outside, in a bellows, stepped or thinned wall fashion, which can be positioned at an on/off switch of the lighting system of the drill 1, e.g. in a lateral wall of the sheath 24, and deformable so as to allow the actuation of the button from the outside of the sheath 24.

According to the presence of a single or both the second 39 or third 43 bellows-like portion, such second 39 or third 43 bellows-like portion may be formed in the region indicated for the sake of simplicity by means of both reference numbers 39 and 43 or, if both second 39 or third 43 bellows-like portions are envisaged, they may be formed in mutually distanced regions of the sheath 24.

Advantageously, the portions 37, 39, 43, 41 of the sheath 24 which cover switching members (e.g. one or more on, off, speed switch, lighting, programming and viewing buttons) of the drill 1, are defined and visibly highlighted by a step-like or grooved contour.

Similarly, also the transparent viewing zones 38, 42 of the sheath 24 may be defined and visibly highlighted by means of a step-like or grooved contour.

This makes it possible to immediately recognise all the use interfaces of the drill 1 covered by the sheath 24 and facilitate its use.

In a preferred embodiment, the protective sheath covers the motor 2 and at least one part of the battery 6 of the drill 1, so that a handle 22 for transporting the drill 1, a tool advancement lever 44, the fixing means 12 (if envisaged), and the portion or wing 10 which supports the drilling tool 3 extend outside the sheath 24.

In the "U"-shaped drill configuration described above, the sheath 24 is applied only onto the upper wing of the structure of the drill 1.

The sheath 24 is advantageously formed in one piece of elastomeric material, e.g. silicon, for example made by injection moulding.

The sheath 24 makes it possible to confer an IP33, IP 43 or higher degree of protection (as defined in standard EN 60529 (CEI 70-1)) to the drill 1.

Obviously, a person skilled in art may make further changes and variants to the protective sheath 24 and to the drill 1, all contained within the scope of protection of the invention as defined in the following claims, in order to satisfy contingent and specific needs.

## Claims

1. Protective sheath (24) applicable to a drill (1) for drilling rails of the type having:
- a support portion (7) that supports an electric motor (2) that can be powered by a battery (6), a drilling tool (3) defining a tool axis (4), and a reduction gear (5) arranged between the motor (2) and the drilling tool (3),
- a rechargeable battery (6) removably coupled with the electric motor (2),
**wherein** said sheath (24) is made of elastomeric flexible material, impermeable to liquids, and has a generically tubular shape with a front opening (25) and a rear opening (26) opposite the front opening (25) in the direction of the tool axis (4), so as to be able to be slotted over the electric motor (2) and over at least a part of the battery (6) to protect them,
**wherein** the sheath (24) forms a ventilation channel (27) with two first inlet openings (28) formed in an outer surface of the sheath (24) and facing downwards, and with an inner ventilation section (29) that is concave and open towards the inside of the sheath (24) so as to communicate cooling air from the inlet opening (28) to a cooling system of the drill (1), **characterized in that** the ventilation channel (27) is shaped like an arc extending along two lateral walls and along an upper wall of the sheath (24) so as to be positioned, when the sheath is applied on the drill, astride of the electric motor (2), and wherein the air inlet openings (28) are formed at the two lower ends of the ventilation channel (27).

2. Sheath (24) according to claim 1, wherein the ventilation channel (27) comprises two suction filters (45).

3. Sheath (24) according to one of the previous claims, forming a discharge channel (30) with at least one outlet opening (31) formed in an outer surface of the sheath (24) and facing downwards, and with an inner discharge section (32) that is concave and open towards the inside of the sheath (24) so as to be able to receive air expelled by the cooling system of the drill (1) and discharge it through the outlet opening (31).

4. Sheath (24) according to claim 3, wherein the inner discharge section (32) comprises two opposite side cavities, formed in two side walls of the sheath (24) and in communication with the at least one outlet opening (31) formed in a bottom wall of the sheath (24) and facing downwards.

5. Sheath (24) according to claim 3 or 4, wherein the discharge channel (30) can comprise one or more filters.

6. Sheath (24) according to one of claims 3 to 5, wherein the ventilation channels (27) and discharge channels (30) are mutually spaced apart so as to prevent or hinder the suction of air from the discharge channel (30) in the ventilation channel (27).

7. Sheath (24) according to one of the previous claims, forming a fixing hole (33) for the reversible fixing of the correct position of the sheath (24) on the drill (1) through a locking member (23).

8. Sheath (24) according to one of the previous claims, having a battery opening (35) able to be positioned at the battery (6) of the drill (1) and delimited by a battery-covering edge (34) that is flexible and elastically widenable so as to:
- cover a battery interface (18) of the drill (1) and at least one part of the battery (6) when the battery is attached to the battery interface (18),
- allow the coupling and decoupling and the removal of the battery (6) from the drill (1) through the battery opening (35), without having to remove the sheath (24) from the drill (1).

9. Sheath (24) according to claim 8, wherein the battery-covering edge (34) forms a handle portion (36) projecting towards the outside of the sheath (24) to facilitate the manual gripping and the widening of the battery opening (35), said handle portion (36) being formed on an upper side of the battery-covering edge (34).

10. Sheath (24) according to one of claims 8 and 9, wherein the battery opening (35) is formed by the front opening (25).

11. Sheath (24) according to one of the previous claims, forming a first portion (37) projecting towards the outside, in a bellows, stepped or thinned wall fashion, able to be positioned at a member (16) for switching the drill (1) on and off and deformable so as to allow the actuation of the member (16) for switching on and off from outside of the sheath (24).

12. Sheath (24) according to one of the previous claims, forming one or more visualisation areas (38, 42) made of transparent material and that do not substantially alter the visibility of colours, wherein said visualisation areas (38, 42) can be positioned at displays (17, 19) of the drill (1).

13. Sheath (24) according to one of the previous claims, forming at least one of:
- a second portion (39) projecting towards the outside, in a bellows, stepped or thinned wall fashion, able to be positioned at a speed switch (40) of the drill (1) and deformable so as to allow the manual switching of the speed switch (40) from outside of the sheath (24),
- a third portion (43) projecting towards the outside, in a bellows, stepped or thinned wall fashion, able to be positioned at a member for the activation of lights of the drill (1) and deformable so as to allow the manual actuation of the light activation member from outside of the sheath (24).

14. Sheath (24) according to one of the previous claims, forming one or more lighting portions (41) made of transparent material, able to be positioned at one or more light sources (14, 15) of a lighting system of the drill (1), or having two distinct lighting portions (41) spaced apart and arranged on two opposite sides with respect to a hypothetical vertical mid-plane of the sheath (24) and facing in the frontward direction or in a front-rear direction.

15. A combination of a drill (1) for drilling rails and a protective sheath (24) applicable to the drill (1),
**wherein** the drill (1) has:
- a support portion (7) that supports an electric motor (2) that can be powered by a battery (6), a drilling tool (3) defining a tool axis (4), and a reduction gear (5) arranged between the motor (2) and the drilling tool (3),
- a rechargeable battery (6) removably coupled with the electric motor (2),
- a cooling system of the motor (2) with one or more air intake openings (20) formed in a rear wall or in a rear-side wall of the motor (2) on a user side of the drill (1), as well as one or more air discharge openings (21) formed in a front wall or in a front-side wall of the motor (2) on a tool side of the drill (1),
**wherein** said sheath (24) is made of elastomeric flexible material, impermeable to liquids, and has a generically tubular shape with a front opening (25) and a rear opening (26) opposite the front opening (25) in the direction of the tool axis (4), so as to be able to be slotted over the electric motor (2) and over at least a part of the battery (6) to protect them,
**wherein** the sheath (24) forms a ventilation channel (27) with at least one first inlet opening (28) formed in an outer surface of the sheath (24) and facing downwards, and with an inner ventilation section (29) that is concave and open towards the inside of the sheath (24) so as to communicate cooling air from the inlet opening (28) to said cooling system of the drill (1).

## Patentansprüche

1. Schutzhülle (24), anwendbar bei einem Bohrer (1) zum Bohren von Schienen, des Typs mit:
- einem Stützteil (7), das einen Elektromotor (2), welcher durch eine Batterie (6) bestrombar ist, ein Bohrwerkzeug (3), welches eine Werkzeugachse (4) definiert, und ein zwischen dem Motor (2) und dem Bohrwerkzeug (3) angeordnetes Untersetzungsgetriebe (5) stützt,
- einer wiederaufladbaren Batterie (6), die lösbar mit dem Elektromotor (2) gekoppelt ist,
wobei die Hülle (24) aus flexiblem Elastomermaterial besteht, für Flüssigkeiten undurchlässig ist, und eine allgemein rohrförmige Form mit einer vorderen Öffnung (25) und einer der vorderen Öffnung (25) in Richtung der Werkzeugachse (4) entgegengesetzten hinteren Öffnung (26) aufweist, so dass sie über den Elektromotor (2) und über zumindest einen Teil der Batterie (6) steckbar ist, um diese zu schützen,
wobei die Hülle (24) einen Lüftungskanal (27) mit zwei ersten Einlassöffnungen (28), die in einer Außenfläche der Hülle (24) gebildet sind und nach unten gerichtet sind, und mit einem inneren Lüftungsabschnitt (29) bildet, welcher konkav und zur Innenseite der Hülle (24) offen ist, um Kühlluft von der Einlassöffnung (28) zu einem Kühlsystem des Bohrers (1) zu leiten, **dadurch gekennzeichnet, dass** der Lüftungskanal (27) nach Art eines Bogens geformt ist, welcher sich entlang zweier Seitenwände und entlang einer oberen Wand der Hülle (24) erstreckt, um, wenn die Hülle an dem Bohrer angebracht ist, rittlings auf dem Elektromotor (2) positioniert zu sein, und wobei die Einlassöffnungen (28) an den beiden unteren Enden des Lüftungskanals (27) gebildet sind.

2. Hülle (24) nach Anspruch 1, bei welcher der Lüftungskanal (27) zwei Saugfilter (45) aufweist.

3. Hülle (24) nach einem der vorangehenden Ansprüche, welche einen Auslasskanal (30) mit mindestens einer Auslassöffnung (31), die in einer Außenfläche der Hülle (24) gebildet ist und nach unten gerichtet ist, und mit einem inneren Auslassabschnitt (32) bildet, welcher konkav und in Richtung des Inneren der Hülle (24) offen ist, um in der Lage zu sein, von dem Kühlsystem des Bohrers (1) ausgestoßene Luft aufzunehmen und diese durch die Auslassöffnung (31) auszulassen.

4. Hülle (24) nach Anspruch 3, bei welcher der innere Auslassabschnitt (32) zwei gegenüberliegende Seitenhohlräume aufweist, welche in zwei Seitenwänden der Hülle (24) gebildet sind und mit der mindestens einen Auslassöffnung (31) verbunden sind, welche in einer unteren Wand der Hülle (24) ausgebildet ist und nach unten gerichtet ist.

5. Hülle (24) nach Anspruch 3 oder 4, bei welcher der Auslasskanal (30) zwei oder mehr Filter umfassen kann.

6. Hülle (24) nach einem der Ansprüche 3 bis 5, bei welcher die Lüftungskanäle (27) und die Auslasskanäle (30) voneinander beabstandet sind, um das Ansaugen von Luft aus dem Auslasskanal (30) in den Lüftungskanal (27) zu verhindern oder zu behindern.

7. Hülle (24) nach einem der vorangehenden Ansprüche, welche ein Fixierloch (33) für das reversible Fixieren der korrekten Position der Hülle (24) an dem Bohrer (1) mittels eines Verriegelungselements (23) bildet.

8. Hülle (24) nach einem der vorangehenden Ansprüche, mit einer Batterieöffnung (35), die an der Batterie (6) des Bohrers (1) positionierbar ist und durch einen Batterieabdeckungsrand (34) begrenzt ist, der flexible und elastisch aufweitbar ist, um:
- eine Batterieschnittstelle (18) des Bohrers (1) und mindestens einen Teil der Batterie (6) abzudecken, wenn die Batterie an der Batterieschnittstelle (18) angebracht ist,
- das Koppeln und Trennen und das Entfernen der Batterie (6) von dem Bohrer (1) durch die Batterieöffnung (35) zu ermöglichen, ohne das Entfernen der Hülle (24) von dem Bohrer (1) zu erfordern.

9. Hülle (24) nach Anspruch 8, bei welcher der Batterieabdeckungsrand (34) einen Griffbereich (36) ausbildet, der in Richtung der Außenseite der Hülle (24) vorsteht, um das manuelle Greifen und das Aufweiten der Batterieöffnung (35) zu erleichtern, wobei der Griffbereich (36) auf einer Oberseite des Batterieabdeckungsrandes (34) ausgebildet ist.

10. Hülle (24) nach einem der Ansprüche 8 und 9, bei welcher die Batterieöffnung (35) durch die vordere Öffnung (25) gebildet ist.

11. Hülle (24) nach einem der vorangehenden Ansprüche, welche einen ersten Bereich (37) bildet, der nach Art eines Balgen, einer gestuften oder verdünnten Wand nach außen vorsteht, an einem Element (16) zum Ein- und Ausschalten des Bohrers (1) positionierbar ist, und verformbar ist, um das Betätigen des Elements (16) zum Ein- und Ausschalten von außerhalb der Hülle (24) zu ermöglichen.

12. Hülle (24) nach einem der vorangehenden Ansprüche, welche einen oder mehrere Sichtbereiche (38, 42) ausbildet, welche aus transparentem Material gebildet sind und die Sichtbarkeit von Farben nicht wesentlich verändern, wobei die Sichtbereiche (38, 42) an Anzeigen (17, 19) des Bohrers (1) positionierbar sind.

13. Hülle (24) nach einem der vorangehenden Ansprüche, welche bildet:
- einen zweiten Bereich (39), der nach Art eines Balgen, einer gestuften oder verdünnten Wand nach außen vorsteht, an einem Drehzahlschalter (40) des Bohrers (1) positionierbar ist, und verformbar ist, um das manuelle Betätigen des Drehzahlschalters (40) von außerhalb der Hülle (24) zu ermöglichen, und/oder
- einen dritten Bereich (43), der nach Art eines Balgen, einer gestuften oder verdünnten Wand nach außen vorsteht, an einem Element zum Aktivieren von Leuchten des Bohrers (1) positionierbar ist, und verformbar ist, um das manuelle Betätigen des Elements zum Aktivieren von Leuchten von außerhalb der Hülle (24) zu ermöglichen.

14. Hülle (24) nach einem der vorangehenden Ansprüche, welche einen oder mehr Beleuchtungsbereiche (41) aus transparentem Material ausbildet, an einer oder mehr Lichtquellen (14, 15) eines Beleuchtungssystems des Bohrers (1) positionierbar sind, oder zwei verschiedene Beleuchtungsbereiche (41) aufweist, welche voneinander beabstandet sind und auf zwei, in Bezug auf eine hypothetische vertikale Mittelebene der Hülle (24) gegenüberliegenden Seiten angeordnet sind und nach vorn oder in von vorn nach hinten verlaufender Richtung gewandt sind.

15. Kombination aus einem Bohrer (1) zum Bohren von Schienen und einer auf den Bohrer (1) anwendbaren Schutzhülle (24), wobei der Bohrer (1) aufweist:
- ein Stützteil (7), das einen Elektromotor (2), welcher durch eine Batterie (6) bestrombar ist, ein Bohrwerkzeug (3), welches eine Werkzeugachse (4) definiert, und ein zwischen dem Motor (2) und dem Bohrwerkzeug (3) angeordnetes Untersetzungsgetriebe (5) stützt,
- eine wiederaufladbare Batterie (6), die lösbar mit dem Elektromotor (2) gekoppelt ist,
- ein Kühlsystem des Motors (2) mit einer oder mehr Ansaugöffnungen (20), die in einer hinteren Wand oder einer Rückseitenwand des Motors (2) auf einer Benutzerseite des Bohrers (1) ausgebildet sind, sowie mit einer oder mehr Luftauslassöffnungen (21), die in einer vorderen Wand oder einer Vorderseitenwand des Motors (2) auf einer Werkzeugseite des Bohrers (1) ausgebildet sind,
wobei die Hülle (24) aus flexiblem Elastomermaterial besteht, für Flüssigkeiten undurchlässig ist, und eine allgemein rohrförmige Form mit einer vorderen Öffnung (25) und einer der vorderen Öffnung (25) in Richtung der Werkzeugachse (4) entgegengesetzten hinteren Öffnung (26) aufweist, so dass sie über den Elektromotor (2) und über zumindest einen Teil der Batterie (6) steckbar ist, um diese zu schützen,
wobei die Hülle (24) einen Lüftungskanal (27) mit mindestens einer ersten Einlassöffnung (28), die in einer Außenfläche der Hülle (24) gebildet ist und nach unten gerichtet ist, und mit einem inneren Lüftungsabschnitt (29) bildet, welcher konkav und zur Innenseite der Hülle (24) offen ist, um Kühlluft von der Einlassöffnung (28) zu einem Kühlsystem des Bohrers (1) zu leiten.

## Revendications

1. Gaine de protection (24) applicable à un foret (1) pour percer des rails du type comprenant :
- une partie de support (7) qui porte un moteur électrique (2) qui peut être alimenté par une batterie (6), un outil de forage (3) définissant un axe d'outil (4) et un engrenage de réduction (5) agencé entre le moteur (2) et l'outil de forage (3),
- une batterie rechargeable (6) reliée de façon séparable au moteur électrique (2),
dans laquelle la gaine (24) est réalisée en un matériau élastomère flexible, imperméable aux liquides, et qui a une forme essentiellement tubulaire avec une ouverture avant (25) et une ouverture arrière (26) opposée à l'ouverture avant (25) dans la direction de l'axe d'outil (4) afin d'être en mesure d'être emboîtée sur le moteur électrique (2) et sur au moins une partie de la batterie (6) afin de les protéger, dans laquelle la gaine (24) forme un canal de ventilation (27) avec deux premières ouvertures d'entrée (28) formées dans une surface extérieure de la gaine (24) et orientées vers le bas, et avec une zone de ventilation intérieure (29) qui est concave et ouverte vers le côté intérieur de la gaine (24) afin de laisser passer de l'air de refroidissement de l'ouverture d'entrée (28) à un système de refroidissement du foret (1),
**caractérisée en ce que** le canal de ventilation (27) est formé comme un arc s'étendant le long de deux parois latérales et le long d'une paroi supérieure de la gaine (24) afin d'être positionné, lorsque la gaine est posée sur le foret, à califourchon sur le moteur électrique (2), et dans laquelle les ouvertures d'entrée d'air (28) sont formées aux deux extrémités inférieures du canal de ventilation (27).

2. Gaine de protection (24) selon la revendication 1, dans laquelle le canal de ventilation (27) comprend deux filtres d'aspiration (45).

3. Gaine de protection (24) selon l'une des revendications précédentes, formant un canal de sortie (30) avec au moins une ouverture de sortie (31) formée dans une surface extérieure de la gaine (24) et orientée vers le bas, et avec une zone de sortie intérieure (32) qui est concave et ouverte vers l'intérieur de la gaine (24) afin d'être en mesure de recevoir de l'air envoyé par le système de refroidissement du foret (1) et de le faire partir par les ouvertures de sortie (31).

4. Gaine de protection (24) selon la revendication 3, dans laquelle la zone intérieure de sortie (32) comprend deux cavités latérales opposées formées dans deux parois latérales de la gaine (24) et en communication avec ladite au moins une ouverture de sortie (31) formée dans une paroi de fond de la gaine (24) et orientée vers le bas.

5. Gaine de protection (24) selon la revendication 3 ou 4, dans laquelle le canal de sortie (30) peut comprendre un ou davantage de filtres.

6. Gaine de protection (24) selon l'une des revendications 3 à 5, dans laquelle les canaux de ventilation (27) et les canaux de sortie (30) sont espacés les uns des autres afin d'empêcher ou de gêner l'aspiration d'air du canal de sortie (30) dans le canal de ventilation (27).

7. Gaine de protection (24) selon l'une des revendications précédentes, formant un trou de fixation (33) pour la fixation réversible de la position correcte de la gaine (24) sur le foret (1) par un élément de verrouillage (23).

8. Gaine de protection (24) selon l'une des revendications précédentes, ayant une ouverture de batterie (35) pouvant être positionnée à la batterie (6) du foret (1) et délimitée par un bord de couverture de batterie (34) qui est flexible et élastiquement agrandissable afin de :
- couvrir une interface de batterie (18) du foret (1) et au moins une partie de la batterie (6) lorsque la batterie est attachée à l'interface de batterie (18),
- permettre l'accouplement et le désaccouplement et l'enlèvement de la batterie (6) du foret (1) par l'ouverture de batterie (35) sans avoir à enlever la gaine (24) du foret (1).

9. Gaine de protection (24) selon la revendication 8, dans laquelle le bord de couverture de batterie (34) forme une partie de poignée (36) s'étendant vers l'extérieur de la gaine (24) pour faciliter la saisie manuelle et l'élargissement de l'ouverture de batterie (35), ladite partie de poignée (36) étant formée sur un côté supérieur du bord de couverture de batterie (34).

10. Gaine de protection (24) selon l'une des revendications 8 et 9, dans laquelle l'ouverture de batterie (35) est formée par l'ouverture avant (25).

11. Gaine de protection (24) selon l'une des revendications précédentes, formant une première partie (37) s'étendant vers l'extérieur sous forme de soufflet ou de paroi étagée ou amincie, pouvant être positionnée à un élément (16) pour mettre en route ou arrêter le foret (1) et étant déformable afin de permettre l'actionnement de l'élément (16) pour mettre en route et arrêter de l'extérieur de la gaine (24).

12. Gaine de protection (24) selon l'une des revendications précédentes, formant une ou plusieurs zones de visualisation (38, 42) faites en un matériau transparent et qui ne changent pas essentiellement la visibilité de couleurs, dans laquelle lesdites zones de visualisation (38, 42) peuvent être disposées sur des écrans (17, 19) du foret (1).

13. Gaine de protection (24) selon l'une des revendications précédentes, formant au moins une parmi :
- une deuxième partie (39) s'étendant vers l'extérieur sous forme de soufflet ou de paroi étagée ou amincie, pouvant être positionnée à un commutateur de vitesse (40) du foret (1) et étant déformable afin de permettre l'actionnement manuel du commutateur de vitesse (40) à partir de l'extérieur de la gaine (24),
- une troisième partie (43) s'étendant vers l'extérieur sous forme de soufflet ou de paroi étagée ou amincie, pouvant être positionnée à un élément pour activer des lumières du foret (1) et étant déformable afin de permettre l'actionnement manuel de l'élément pour activer la lumière de l'extérieur de la gaine (24).

14. Gaine de protection (24) selon l'une des revendications précédentes, formant une ou plusieurs parties d'éclairage (41) faites en un matériau transparent, pouvant être positionnées çà une ou plusieurs sources de lumière (14, 15) d'un système d'éclairage du foret (1) ou ayant deux parties distinctes d'éclairage (41) espacées l'une de l'autre et agencées des côtés opposés par rapport à un plan central hypothétiquement vertical de la gaine (24) et orienté dans la direction vers l'avant ou dans une direction avant-arrière.

15. Combinaison d'une foreuse (1) pour le forage de rails et d'une gaine de protection (24) adaptée à la foreuse (1),
dans laquelle la foreuse (1) comprend :
- une partie de support (7) qui porte un moteur électrique (2) qui peut être alimenté par une batterie (6), un outil de forage (3) définissant un axe d'outil (4) et un engrenage de réduction (5) agencé entre le moteur (2) et l'outil de forage (3),
- une batterie rechargeable (6) reliée de façon séparable au moteur électrique (2),
- un système de refroidissement du moteur (2) avec une ou davantage d'ouvertures d'entrée d'air (20) formées dans une paroi arrière ou dans une paroi du côté arrière du moteur (2) d'un côté utilisateur du foret (1), ainsi qu'une ou davantage d'ouvertures de sortie (21) formées dans une paroi avant ou dans une paroi du côté avant du moteur (2) d'un côté outil du foret (1),
dans laquelle la gaine (24) est faite en un matériau élastomère flexible, imperméable aux liquides, et qui a une forme essentiellement tubulaire avec une ouverture avant (25) et une ouverture arrière (26) opposée à l'ouverture avant (25) dans la direction de l'axe d'outil (4) afin d'être en mesure d'être emboîtée sur le moteur électrique (2) et sur au moins une partie de la batterie (6) afin de les protéger,
dans laquelle la gaine (24) forme un canal de ventilation (27) avec au moins une première ouverture d'entrée (28) formée dans une surface extérieure de la gaine (24) et orientée vers le bas, et avec une zone de ventilation intérieure (29) qui est concave et ouverte vers le côté intérieur de la gaine (24) afin de laisser passer de l'air de refroidissement de l'ouverture d'entrée (28) à un système de refroidissement du foret (1).
